# EUROPÄISCHE PATENTSCHRIFT

(11) **EP 2 383 461 B1**
(45) Veröffentlichungstag und Bekanntmachung des Hinweises auf die Patenterteilung: **13.06.2018**
(21) Anmeldenummer: 11161342.8
(22) Anmeldetag: 06.04.2011
(51) Int. Cl.: F02N 11/08, F02D 31/00, B60W 50/08

(54) **Verfahren zum Betrieb einer Start/Stopp-Automatik in einem Kraftfahrzeug**
Method for operating an automatic stop/start system in a motor vehicle
Procédé de fonctionnement d'un dispositif automatique Marche/Arrêt dans un véhicule automobile

(30) Priorität: 28.04.2010 DE 102010028331
(43) Veröffentlichungstag der Anmeldung: 02.11.2011
(73) Patentinhaber: Ford Global Technologies, LLC, Dearborn, MI 48126 (US)
(72) Erfinder: Busch, Rainer, 52076, Aachen (DE); Christen, Urs, 52072, Aachen (DE); Gussen, Uwe, 52393, Hürtgenwald (DE); Kees, Markus, 41516, Grevenbroich (DE)
(74) Vertreter: Dörfler, Thomas

(56) Entgegenhaltungen:
- EP-A1- 1 995 436
- DE-A1- 10 331 240
- DE-A1- 19 946 334

## Beschreibung

Die Erfindung betrifft ein Verfahren und eine Vorrichtung zum Betrieb einer Start/Stopp-Automatik in einem Kraftfahrzeug mit Verbrennungsmotor, Handschaltgetriebe und automatischem Kupplungssystem, gemäß den Oberbegriffen der unabhängigen Patentansprüche.

Die DE 103 31 240 A1 offenbart ein derartiges Verfahren, bei dem in einem Zustand, in dem das Kraftfahrzeug antriebslos rollt, der Verbrennungsmotor abgeschaltet ist und die Kupplung geöffnet ist, der Verbrennungsmotor automatisch neu gestartet wird und seine Drehzahl ungefähr auf die Drehzahl der Eingangswelle des Handschaltgetriebes gebracht wird, wenn eine maximal zulässige Geschwindigkeit überschritten wird. Damit wird Start/Stopp nur bis zu einer festen Fahrzeuggeschwindigkeit zugelassen, unabhängig vom gerade eingelegten Gang.

Bei Mikrohybridfahrzeugen handelt es sich um Kraftfahrzeuge mit einem Verbrennungsmotor, einem eher konventionell dimensionierten elektrischen Startermotor, einer Start-Stopp-Automatik sowie einer Bremsenergierückgewinnung zum Laden eines eher klein dimensionierten Starterakkus. Mittels der Start-Stopp-Automatik kann der Verbrennungsmotor automatisch gestoppt, d.h. abgeschaltet werden, wenn kein Vortrieb benötigt wird, etwa beim Ausrollen, und neu gestartet werden, wenn der Fahrer wieder Leistung abruft. Weiterhin ist vorgesehen, den Verbrennungsmotor bei höherer Fahrzeuggeschwindigkeit zu stoppen, z.B. bei 50 km/h, wenn das Fahrzeug in eine Verzögerungsphase eintritt, wie bei Annäherung an eine Verkehrsampel. Wenn die Ampel auf Grün schaltet, bevor das Fahrzeug zum Stillstand gekommen ist, z.B. bei einer Fahrzeuggeschwindigkeit von 15 km/h, und der Fahrer wieder auf das Fahrpedal tritt, wird der Verbrennungsmotor gestartet und der Antriebsstrang geschlossen, so dass Antriebsmoment auf die Räder übertragen werden kann.

Solange der Verbrennungsmotor läuft, erhält der Fahrer eine hörbare Rückmeldung, ob zu schalten ist oder nicht. Wenn der Verbrennungsmotor akustisch gesehen mit hoher Drehzahl wahrzunehmen ist, ist ein höherer Gang zu wählen, und wenn dieser sich ungewöhnlich tieffrequent anhört, ist ein niedrigerer Gang zu wählen.

Wenn ein Kraftfahrzeug mit Verbrennungsmotor, Handschaltgetriebe, automatischem Kupplungssystem und Start/Stopp-Automatik antriebslos rollt, d.h., wenn der Verbrennungsmotor von den Rädern abgekoppelt und abgeschaltet ist, weil der Fahrer keine Vortriebskraft anfordert (Fahrpedal nicht getreten), fehlt die hörbare Rückmeldung anhand des Motorklanges. Solange die Drehzahl der Getriebeeingangswelle innerhalb vernünftiger Grenzen bleibt, z.B. zwischen 1300 und 3500 U/min für einen Dieselmotor, stellt dies kein Problem dar. Doch kann es vorkommen, dass in dem Augenblick, in dem der Fahrer wieder Vortriebskraft anfordert, ein falscher Gang eingelegt ist. So passt in dem o.g. Beispiel der für eine Fahrzeuggeschwindigkeit von 50 km/h gewählte Gang normalerweise nicht zu einer Fahrzeuggeschwindigkeit von 15 km/h.

In dem Falle, dass ein falscher Gang eingelegt ist, kann der Antriebsstrang nicht geschlossen werden, weil die elektronische Steuerung des automatischen Kupplungssystems das automatische Einkuppeln unterbindet, und es steht keine Vortriebskraft zur Verfügung, bis der Fahrer den richtigen Gang eingelegt hat.

Insbesondere wird das automatische Einkuppeln bei falsch eingelegtem Gang aus den folgenden Gründen unterbunden: Wenn der Fahrer, während das Kraftfahrzeug antriebslos rollt und das Kraftfahrzeug entweder langsamer oder - bei Gefälle - schneller wird, nicht passend zur Fahrzeuggeschwindigkeit herunter- oder hochschaltet und die Fahrzeuggeschwindigkeit im Zeitpunkt des Wiederabrufs von Vortriebskraft sehr von jener verschieden ist, bei der der Verbrennungsmotor abgeschaltet worden ist, so würde der Verbrennungsmotor durch Einkuppeln entweder unter Leerlaufdrehzahl gebracht, d.h. stotternd laufen oder sogar abgewürgt werden, oder die zulässige Maximaldrehzahl würde überschritten.

Eine Methode, dem Fahrer eines Kraftfahrzeugs mit automatischem Kupplungssystem einen falsch eingelegten Gang anzuzeigen, ist die Ausgabe von akustischen oder optischen Warnsignalen, wie dies in der DE 199 46 334 A1 beschrieben ist. Dies kann einen Fahrer aber stören, und ein Fahrer, der mit einem derart ausgebildeten Kraftfahrzeug nicht vertraut ist, kann durch solche Warnsignale verwirrt werden und benötigt möglicherweise viel Zeit, um richtig zu reagieren.

Der Erfindung liegt die Aufgabe zu Grunde, eine Start/Stopp-Automatik in einem Kraftfahrzeug mit Verbrennungsmotor, Handschaltgetriebe und automatischem Kupplungssystem während antriebslosem Rollen besonders ergonomisch zu betreiben.

Diese Aufgabe wird durch ein Verfahren und eine Vorrichtung mit den Merkmalen der unabhängigen Patentansprüche gelöst.

Durch die Erfindung erhält der Fahrer die von herkömmlichen Kraftfahrzeugen mit Handschaltgetriebe und pedalbetätigter Kupplung gewohnte akustische Rückmeldung, dass der Verbrennungsmotor nieder- oder hochtourig läuft und ein Hoch- oder Herunterschalten angebracht ist. Eine derartige akustische Rückmeldung stört einen erfahrenen Fahrer praktisch nicht, und wenn er in Reaktion darauf hoch- bzw. herunterschaltet, kann er im Falle, dass er wieder auf das Fahrpedal tritt, sofort beschleunigen.

Der Begriff Handschaltgetriebe, wie im Rahmen der vorliegenden Anmeldung verwendet, soll nicht nur klassische Schaltgetriebe mit mechanischem Schalthebel umfassen, sondern auch automatisierte Schaltgetriebe, die per Hand über Drucktaster od. dgl. betätigt werden, sowie Automatikgetriebe im Handschaltungsmodus.

In einer bevorzugten Ausführungsform werden Schaltreaktionen des Fahrers, die der akustischen Rückmeldung angemessen sind, zusätzlich dadurch gefördert oder provoziert, dass gelegentliche Fehlzündungen des Verbrennungsmotors simuliert oder erzeugt werden, wenn die gegenwärtige Fahrzeuggeschwindigkeit den für den gegenwärtig eingelegten Gang zulässigen Geschwindigkeitsbereich unterschreitet. So etwas kennen die meisten Fahrer und reagieren praktisch ohne Nachdenken mit Herunterschalten. Im anderen Fall, wenn die gegenwärtige Fahrzeuggeschwindigkeit den zulässigen Geschwindigkeitsbereich überschreitet, wird eine akustische Anomalie, die den Fahrer auf das Schalt-Erfordernis hinweist, vorzugsweise dadurch erzeugt, dass die Drehzahl des Verbrennungsmotor periodisch noch weiter erhöht wird. So etwas interpretieren die meisten Fahrer z.B. als durchdrehende Räder und reagieren mehr oder weniger automatisch mit Hochschalten.

Bei der Erfindung wird der Verbrennungsmotor in vielen Fällen zwar früher wieder gestartet als bei bisherigen Start/Stopp-Automatiken, aber auch nicht früher als nötig, wenn der angemessene Drehzahlbereich nur wenig kleiner ist als der maximal zulässige Drehzahlbereich.

Die Erfindung lässt sich in der Regel ohne zusätzliche Sensorik oder andere zusätzliche Elektrik oder Elektronik realisieren, einfach durch Aktualisierung der Fahrzeugsoftware. Dazu wird gemäß der Erfindung in einem Zustand, in dem das Kraftfahrzeug antriebslos rollt, der Verbrennungsmotor abgeschaltet ist und die Kupplung geöffnet ist, fortwährend aus der gemessenen Fahrzeuggeschwindigkeit und dem von einer elektronischen Ganganzeige angezeigten gegenwärtig eingelegten Gang die Drehzahl der Eingangswelle des Handschaltgetriebes berechnet, welche üblicherweise gleich der Drehzahl der Ausgangswelle der Kupplung ist. In dem Augenblick, in dem diese Drehzahl einen angemessenen, innerhalb eines maximal zulässigen Drehzahlbereichs liegenden Drehzahlbereich für die Kurbelwelle des Verbrennungsmotors verlässt, wird der Verbrennungsmotor gestartet und wird die Drehzahl seiner Kurbelwelle ungefähr auf die Drehzahl der Eingangswelle des Handschaltgetriebes gebracht.

Die Erfindung kann jedoch auch Verwendung finden, wenn bestimmte vorhandene Sensoren zur Bestimmung von Größen benutzt werden, die im Verfahren berechnet werden. Z. B. kann die Drehzahl der Getriebeeingangswelle statt das sie berechnet wird auch gemessen werden. Bei einem Getriebe mit automatisierter Kupplung kann es für die präzise Kupplungssteuerung notwendig sein, die Drehzahl der Getriebeeingangswelle direkt zu messen.

Das Verfahren, den Fahrer zum Schalten aufzufordern, kann auch angewandt werden, wenn der Motor nicht gestoppt ist, sondern nur im Leerlauf betrieben wird und die Drehzahl der Getriebeeingangswelle die zulässige Motordrehzahl übersteigt oder unterschreitet. Bei Überschreitung kann der Motor wie bei gestoppten Motor auf eine hohe Drehzahl beschleunigt werden. Bei Unterschreitung kann der Motor regel- oder unregelmäßig beschleunigt und abgebremst werden, wie z. B. ein mehrmaliges Aufheulen eines Motors beim Ampelstart oder ein Stottern des Motors wie es beim Abwürgen eines Motors auftritt.

Die Erfindung wird nachfolgend anhand eines in den Zeichnungen dargestellten Ausführungsbeispiels näher erläutert. Es zeigen:
- Fig. 1: eine Skizze zur Erläuterung des Prinzips, gemäß dem eine Start/Stopp-Automatik betrieben wird; und
- Fig. 2: ein Flussdiagramm eines Verfahrens zum Betrieb der Start/Stopp-Automatik.

Ein nicht gezeigtes Kraftfahrzeug mit Start/Stopp-Automatik, die den Verbrennungsmotor automatisch abschaltet, wenn das Kraftfahrzeug antriebslos rollt, enthält einen Verbrennungsmotor, ein Handschaltgetriebe und ein automatisches Kupplungssystem, d.h. eine elektronisch gesteuerte Kupplung.

In einem Zustand, in dem das Kraftfahrzeug antriebslos rollt, ist es eine häufige Steuerstrategie, dass die Start/Stopp-Automatik sofort den Verbrennungsmotor abschaltet und die Kupplung öffnet. Eine alternative Steuerstrategie wäre, dass dies erst auf klar erkennbaren Fahrerwunsch hin geschieht, z.B. weil der Fahrer in den Leerlauf schaltet.

Um eine Situation zu vermeiden, in der der Fahrer bei abgeschaltetem Verbrennungsmotor das Fahrpedal betätigt, woraufhin der Verbrennungsmotor zwar gestartet wird, der Fahrer aber keine Vortriebskraft bekommt, weil die Kupplung nicht automatisch geschlossen werden kann, ohne den Verbrennungsmotor dadurch auf Unter- oder Überdrehzahl zu bringen, wird der Verbrennungsmotor automatisch neu gestartet, wenn die Drehzahl der Getriebeeingangswelle einen Drehzahlbereich verlässt, der einem angemessenen, d.h. empfohlenen Drehzahlbereich für die Kurbelwelle des Verbrennungsmotors entspricht.

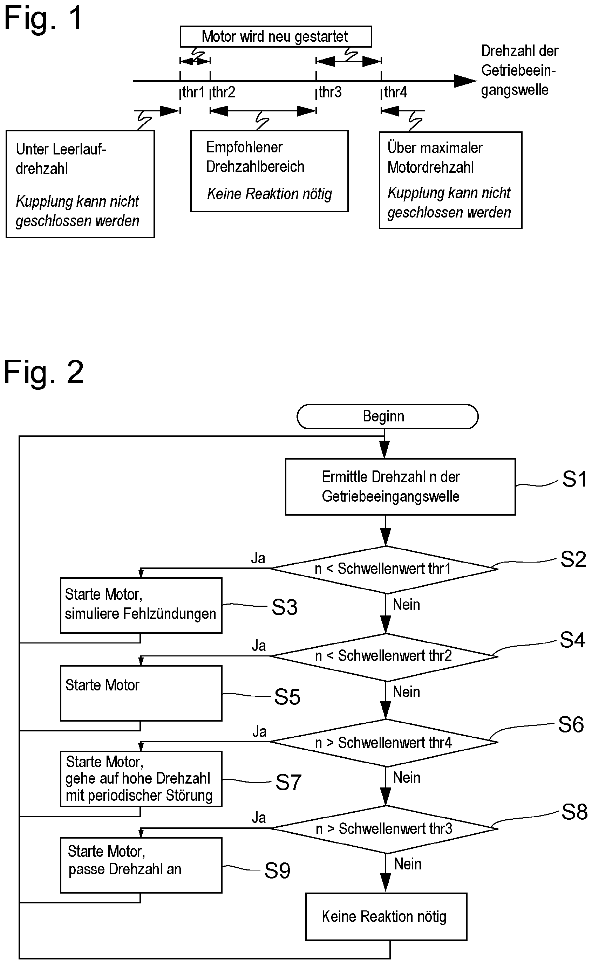

In Fig. 1 ist die Drehzahl der Getriebeeingangswelle entlang eines horizontalen Pfeils von links nach rechts zunehmend eingetragen. Für die Drehzahl der Getriebeeingangswelle sind vier Schwellenwerte definiert. Ein erster Schwellenwert *thr1* stellt die minimal zulässige Drehzahl der Kurbelwelle des Verbrennungsmotors dar. Ein zweiter Schwellenwert *thr2,* der etwas größer als der erste Schwellenwert *thr1* ist, stellt die untere Grenze eines angemessenen oder empfohlenen Drehzahlbereichs dar. Ein dritter Schwellenwert *thr3,* der größer als der zweite Schwellenwert *thr2* ist, stellt die obere Grenze des angemessenen oder empfohlenen Drehzahlbereichs dar. Ein vierter Schwellenwert *thr4,* der etwas größer als der dritte Schwellenwert *thr3* ist, stellt die maximal zulässige Drehzahl der Kurbelwelle des Verbrennungsmotors dar. Unterhalb des ersten Schwellenwertes *thr1* und oberhalb des vierten Schwellenwertes *thr4* wird ein Schließen der automatischen Kupplung stets unterbunden.

In dem Augenblick, in dem der Verbrennungsmotor abgeschaltet wird, weil der Fahrer den Fuß vom Fahrpedal genommen hat, liegt die Drehzahl der Getriebeeingangswelle normalerweise in dem Drehzahlbereich vom zweiten Schwellenwert *thr2* bis zum dritten Schwellenwert *thr3.* Solange die Drehzahl in diesem Drehzahlbereich bleibt, ist keine Reaktion des Fahrers erforderlich. Wenn sich die Drehzahl der Getriebeeingangswelle ändert, weil das Kraftfahrzeug langsamer oder schneller wird, und in einen der Drehzahlbereiche vom ersten Schwellenwert *thr1* bis zum zweiten Schwellenwert *thr2* oder vom dritten Schwellenwert *thr3* bis zum vierten Schwellenwert *thr4* gelangt, wird der Verbrennungsmotor wieder gestartet, wobei die Drehzahl seiner Kurbelwelle ungefähr auf die Drehzahl der Getriebeeingangswelle gebracht wird.

Wenn sich die Drehzahl der Getriebeeingangswelle in einem der Drehzahlbereiche vom ersten Schwellenwert *thr1* bis zum zweiten Schwellenwert *thr2* oder vom dritten Schwellenwert *thr3* bis zum vierten Schwellenwert *thr4* befindet, kann die Kupplung geschlossen werden oder nicht, je nach Grundeinstellung bzw. Ausführungsform.

Die Kupplung in den genannten Drehzahlbereichen zu schließen, stellt ein Schleppmoment bereit, welches im Falle von sehr hoher Motordrehzahl einer weiteren Fahrzeugbeschleunigung entgegenwirkt und im Falle von ziemlich niedriger Motordrehzahl Fahrt bei Leerlaufdrehzahl ermöglicht, da der Leerlaufdrehzahlregler die Motordrehzahl und damit die Fahrzeuggeschwindigkeit konstant hält. Andererseits bevorzugen manche Fahrer möglicherweise, dass die Kupplung in den genannten Drehzahlbereichen geöffnet gehalten wird, solange der Fahrer noch keinen Anlass zu der Annahme gegeben hat, dass er Vortriebskraft wünscht.

In beiden Fällen hört der Fahrer die akustische Rückmeldung vom Verbrennungsmotor, die auf die Notwendigkeit eines Gangwechsels hinweist, um die Motordrehzahl auf einen vernünftigeren Wert zu bringen. Somit kann der Fahrer auf die vertrauten Hinweise reagieren, dass ein Gangwechsel erforderlich ist, und es kann nicht mehr die Situation auftreten, dass der Fahrer dann, wenn er nach Vortriebskraft verlangt, erst einmal schalten muss.

Im Folgenden werden Szenarien beschrieben, in denen das oben beschriebene Verfahren nützlich ist.
a) In einem ersten Szenario fährt ein Kraftfahrzeug mit 50 km/h im fünften Gang auf einer ebenen Straße. Der Fahrer nimmt den Fuß vom Fahrpedal, so dass der Verbrennungsmotor automatisch gestoppt wird. Die Fahrzeuggeschwindigkeit nimmt langsam ab, ebenso wie die Drehzahl der Getriebeeingangswelle. Wenn die Drehzahl der Getriebeeingangswelle eine untere Grenze erreicht, z.B. 1200 U/min, was im fünften Gang möglicherweise einer Fahrzeuggeschwindigkeit von 35 km/h entspricht, wird der Verbrennungsmotor automatisch neu gestartet, da der Fahrer in der Zwischenzeit nicht den eingelegten Gang angepasst hat, um die Getriebeeingangswelle auf einer höheren Drehzahl zu halten. Der Fahrer hört dann den niedertourig laufenden Motor und kann einen passenden Gang einlegen.
b) In einem zweiten Szenario fährt das Kraftfahrzeug mit 20 km/h im zweiten Gang auf einer Straße mit mäßigem Gefälle. Der Fahrer nimmt den Fuß vom Fahrpedal, und der Verbrennungsmotor wird automatisch gestoppt. Die Fahrzeuggeschwindigkeit nimmt langsam zu, ebenso wie die Drehzahl der Getriebeeingangswelle. Wenn die Drehzahl der Getriebeeingangswelle eine obere Grenze erreicht, z.B. 4000 U/min, was im zweiten Gang vielleicht einer Fahrzeuggeschwindigkeit von 45 km/h entspricht, wird der Verbrennungsmotor automatisch neu gestartet und auf die Drehzahl der Getriebeeingangswelle gebracht, da der Fahrer in der Zwischenzeit nicht den eingelegten Gang angepasst hat, um die Getriebeeingangswelle auf einer niedrigeren Drehzahl zu halten. Der Fahrer hört dann den hochtourig laufenden Motor und kann einen passenden Gang einlegen.

Wenn die Drehzahl der Getriebeeingangswelle noch weiter von der Drehzahl der Kurbelwelle des Verbrennungsmotors abweicht, nämlich den ersten Schwellenwert *thr1* unterschreitet oder den vierten Schwellenwert *thr4* überschreitet, wird der Verbrennungsmotor annähernd mit Leerlaufdrehzahl bzw. Maximaldrehzahl betrieben und zusätzlich akustisch anomal betrieben, wie weiter unten erläutert wird.

Falls der Fahrer versucht, den Gang anzupassen, um Motorneustarts wie oben zu verhindern, jedoch den falschen Gang, wählt, gibt es die folgenden Szenarien:
c) In der Situation des Szenarios a) schaltet der Fahrer nicht vom fünften in den vierten Gang, wie es angemessen wäre, sondern in den sechsten Gang. Die Drehzahl der Getriebeeingangswelle liegt nun deutlich unter Leerlaufdrehzahl, und die Kupplung kann nicht geschlossen werden, wenn der Verbrennungsmotor wieder läuft.
d) In der Situation des Szenarios b) schaltet der Fahrer nicht vom zweiten in den dritten Gang, wie es angemessen wäre, sondern in den ersten Gang, so dass die Drehzahl der Getriebeeingangswelle über die maximal zulässige Motordrehzahl steigt und die Kupplung ebenfalls nicht geschlossen werden kann, wenn der Verbrennungsmotor wieder läuft.

In beiden Fällen c) und d) sollte der Verbrennungsmotor gestartet werden. Im untertourigen Fall c) sollte der gestartete Verbrennungsmotor auf Leerlaufdrehzahl gehalten werden, und es sollten gelegentliche Fehlzündungen simuliert werden. Dies zeigt dem Fahrer deutlich an, dass die Drehzahl viel zu niedrig ist und dringend eine Korrektur der falschen Getriebeübersetzung nötig ist. Im übertourigen Fall d) sollte die Motordrehzahl schnell auf einen hohen Wert gebracht werden, z.B. 4300 U/min für einen Dieselmotor oder 6000 U/min für einen Benzinmotor. Die Motordrehzahl könnte dann periodisch noch etwas weiter angehoben werden, so dass sich der Fahrer bemüßigt fühlt, einen höheren Gang einzulegen.

Sobald ein passender Gang eingelegt worden ist, kann die Motordrehzahl so geregelt werden, dass sie zu der neuen Drehzahl der Getriebeeingangswelle passt, ohne dass hierbei irgendwelche Fehlzündungen oder periodisches Hochdrehen simuliert werden. Die Kupplung kann dann geschlossen werden, sobald der Fahrer nach Vortriebskraft verlangt, oder der Verbrennungsmotor kann automatisch wieder abgeschaltet werden, wenn der Fahrer das Fahrpedal eine gewisse Zeit lang nicht bedient hat.

Fig. 2 veranschaulicht die Entscheidungslogik für das beschriebene Verfahren, wie sie in einer elektronischen Motorsteuereinheit durchgeführt wird, und die beschriebenen Situationen. Die Schwellenwerte *thr1, thr2, thr3* und *thr4* in Fig. 2 entsprechen jenen, die in Fig. 1 gezeigt sind.

Ausgehend von einem Anfangszustand, in dem das Kraftfahrzeug antriebslos rollt, der Verbrennungsmotor abgeschaltet ist und die Kupplung geöffnet ist, wird im Schritt S1 aus der gegenwärtigen Raddrehzahl und dem gegenwärtig eingelegten Gang, welche der elektronischen Motorsteuereinheit bekannt sind, die Drehzahl *n* der Getriebeeingangswelle berechnet.

Im Schritt S2 wird geprüft, ob die Drehzahl *n* kleiner als der Schwellenwert *thr1* ist. Wenn ja, wird im Schritt S3 der Verbrennungsmotor neu gestartet und auf Leerlaufdrehzahl betrieben, wobei gelegentliche Fehlzündungen simuliert werden, und nach einer gewissen Zeit wird wieder die Drehzahl *n* berechnet (S1). Wenn nein, geht es zum Schritt S4 weiter.

Im Schritt S4 wird geprüft, ob die Drehzahl *n* kleiner als der Schwellenwert *thr2* ist. Wenn ja, wird im Schritt S5 der Verbrennungsmotor neu gestartet und auf Leerlaufdrehzahl betrieben, und nach einer gewissen Zeit wird wieder die Drehzahl *n* berechnet (S1). Wenn nein, geht es zum Schritt S6 weiter.

Im Schritt S6 wird geprüft, ob die Drehzahl *n* größer als der Schwellenwert *thr4* ist. Wenn ja, wird im Schritt S7 der Verbrennungsmotor neu gestartet und auf eine relativ hohe Drehzahl gebracht, wobei der Verbrennungsmotor periodisch noch ein wenig hochtouriger laufen gelassen wird, und nach einer gewissen Zeit wird wieder die Drehzahl *n* berechnet (S1). Wenn nein, geht es zum Schritt S8 weiter.

Im Schritt S8 wird geprüft, ob die Drehzahl *n* größer als der Schwellenwert *thr3* ist. Wenn ja, wird im Schritt S9 der Verbrennungsmotor neu gestartet und auf einer Drehzahl betrieben, die zu der gegenwärtigen Fahrzeuggeschwindigkeit und dem gegenwärtig eingelegten Gang passt, so dass Eingangs- und Ausgangswelle der Kupplung annähernd synchron rotieren, und nach einer gewissen Zeit wird wieder die Drehzahl *n* berechnet (S1). Wenn nein, geht es ohne irgendeine Reaktion zum Schritt S1 zurück.

## Patentansprüche

1. Verfahren zum Betrieb einer Start/Stopp-Automatik in einem Kraftfahrzeug mit Verbrennungsmotor, Handschaltgetriebe und automatischem Kupplungssystem, wobei in einem Zustand, in dem das Kraftfahrzeug antriebslos rollt, der Verbrennungsmotor abgeschaltet ist und die Kupplung geöffnet ist, unter bestimmten Bedingungen der Verbrennungsmotor automatisch neu gestartet und die Drehzahl seiner Kurbelwelle ungefähr auf die Drehzahl der Eingangswelle des Handschaltgetriebes gebracht wird,
**dadurch gekennzeichnet, dass**
in dem Zustand, in dem das Kraftfahrzeug antriebslos rollt, der Verbrennungsmotor abgeschaltet ist und die Kupplung geöffnet ist, fortwährend aus der gemessenen Fahrzeuggeschwindigkeit und dem von einer elektronischen Ganganzeige angezeigten gegenwärtig eingelegten Gang die Drehzahl der Eingangswelle des Handschaltgetriebes durch Berechnung und/oder durch Messung bestimmt wird, welche gleich der Drehzahl der Ausgangswelle der Kupplung ist, und dass in dem Augenblick, in dem diese Drehzahl einen angemessenen, innerhalb eines maximal zulässigen Drehzahlbereichs (*thr1* bis *thr4*) liegenden Drehzahlbereich (*thr2* bis *thr3)* für die Kurbelwelle des Verbrennungsmotors verlässt, der Verbrennungsmotor gestartet und die Drehzahl seiner Kurbelwelle ungefähr auf die Drehzahl der Eingangswelle des Handschaltgetriebes gebracht wird.

2. Verfahren nach Anspruch 1,
**dadurch gekennzeichnet, dass**
wenn die Drehzahl der Eingangswelle des Handschaltgetriebes den maximal zulässigen Drehzahlbereich (*thr1* bis *thr4*) für die Kurbelwelle des Verbrennungsmotors verlässt, welcher größer als der angemessene Drehzahlbereich (*thr2* bis *thr3*) ist und diesen enthält, der Verbrennungsmotor annähernd mit Leerlaufdrehzahl oder mit schwankender Leerlaufdrehzahl bzw. Maximaldrehzahl betrieben und außerdem akustisch anomal betrieben wird.

3. Verfahren nach Anspruch 2,
**dadurch gekennzeichnet, dass**
gelegentliche Fehlzündungen des Verbrennungsmotors simuliert oder erzeugt werden, wenn die Drehzahl der Eingangswelle des Handschaltgetriebes den maximal zulässigen Drehzahlbereich (*thr1* bis *thr4*) für die Kurbelwelle des Verbrennungsmotors unterschreitet.

4. Verfahren nach Anspruch 2 oder 3,
**dadurch gekennzeichnet, dass**
die Drehzahl des Verbrennungsmotors periodisch noch etwas mehr erhöht wird, wenn die Drehzahl der Eingangswelle des Handschaltgetriebes den maximal zulässigen Drehzahlbereich (*thr1* bis *thr4*) für die Kurbelwelle des Verbrennungsmotors überschreitet.

5. Verfahren nach einem der vorhergehenden Ansprüche,
**dadurch gekennzeichnet, dass**
wenn in einem Zustand, in dem das Kraftfahrzeug antriebslos rollt, der Verbrennungsmotor im Leerlauf ist und die Kupplung geöffnet ist, die Drehzahl der Eingangswelle des Handschaltgetriebes den angemessenen Drehzahlbereich (*thr2* bis *thr3)* für die Kurbelwelle des Verbrennungsmotors verlässt, die Drehzahl der Kurbelwelle des Verbrennungsmotors ungefähr auf die Drehzahl der Eingangswelle des Handschaltgetriebes gebracht wird.

6. Vorrichtung zum Betrieb einer Start/Stopp-Automatik in einem Kraftfahrzeug mit Verbrennungsmotor, Handschaltgetriebe und automatischem Kupplungssystem,
**dadurch gekennzeichnet, dass**
die Vorrichtung zur Durchführung eines Verfahrens nach einem der vorhergehenden Ansprüche ausgebildet ist.

## Claims

1. Method for operating an automatic stop/start system in a motor vehicle with an internal combustion engine, manual gearbox and automatic clutch system, wherein in a state in which the motor vehicle rolls without being powered the internal combustion engine is switched off and the clutch is opened, under certain conditions the internal combustion engine is automatically re-started and the rotational speed of its crankshaft is adjusted approximately to the rotational speed of the input shaft of the manual gearbox,
**characterized in that**
in the state in which the motor vehicle rolls without being powered the internal combustion engine is switched off and the clutch is opened, the rotational speed of the input shaft of the manual gearbox is determined continuously from the measured vehicle speed and the gearbox which is presently engaged and is displayed by an electronic gear display, by calculating and/or by measuring which rotational speed is equal to the rotational speed of the output shaft of the clutch, and **in that** at the moment at which this rotational speed exits an appropriate rotational speed range (*thr2 to* thr3), which is within a maximum permissible rotational speed range (*thr1 to thr4*), for the crankshaft of the internal combustion engine, the internal combustion engine is started and the rotational speed of its crankshaft is adjusted approximately to the rotational speed of the input shaft of the manual gearbox.

2. Method according to Claim 1,
**characterized in that**
if the rotational speed of the input shaft of the manual gearbox exits the maximum permissible rotational speed range *(thr1 to thr4)* for the crankshaft of the internal combustion engine, which rotational speed range *(thr1 to thr4)* is greater than the appropriate rotational speed range *(thr2 to thr3)* and contains the latter, the internal combustion engine is operated approximately at the idling speed or at a fluctuating idling speed or maximum rotational speed and is furthermore operated in an acoustically abnormal fashion.

3. Method according to Claim 2,
**characterized in that**
occasional misfirings of the internal combustion engine are simulated or generated if the rotational speed of the input shaft of the manual gearbox undershoots the maximum permissible rotational speed range *(thr1 to thr4)* for the crankshaft of the internal combustion engine.

4. Method according to Claim 2 or 3,
**characterized in that**
the rotational speed of the internal combustion engine is increased periodically somewhat more if the rotational speed of the input shaft of the manual gearbox exceeds the maximum permissible rotational speed range *(thr1 to thr4)* for the crankshaft of the internal combustion engine.

5. Method according to one of the preceding claims,
**characterized in that**
if the internal combustion engine is in the idling mode and the clutch is opened in a state in which the motor vehicle rolls without being powered, the rotational speed of the input shaft of the manual gearbox exits the appropriate rotational speed range *(thr2 to thr3)* for the crankshaft of the internal combustion engine, and the rotational speed of the crankshaft of the internal combustion engine is adjusted approximately to the rotational speed of the input shaft of the manual gearbox.

6. Device for operating an automatic stop/start system in a motor vehicle with an internal combustion engine, manual gearbox and automatic clutch system,
**characterized in that**
the device is designed to carry out a method according to one of the preceding claims.

## Revendications

1. Procédé de fonctionnement d'un dispositif automatique Marche/Arrêt dans un véhicule automobile avec un moteur à combustion interne, une boîte de vitesses manuelle et un système d'embrayage automatique, dans lequel, dans un état où le véhicule automobile roule sans entraînement, où le moteur à combustion interne est coupé et où l'embrayage est ouvert, on fait de nouveau démarrer le moteur à combustion interne automatiquement dans des conditions déterminées et on porte le nombre de tours de son vilebrequin environ au niveau du nombre de tours de l'arbre d'entrée de la boîte de vitesses manuelle, **caractérisé en ce que**, dans l'état où le véhicule automobile roule sans entraînement, où le moteur à combustion interne est coupé et où l'embrayage est ouvert, on détermine en continu par le calcul et/ou par une mesure, à partir de la vitesse mesurée du véhicule et du rapport présentement engagé affiché par un affichage électronique des rapports, le nombre de tours de l'arbre d'entrée de la boîte de vitesses manuelle, qui est égal au nombre de tours de l'arbre de sortie de l'embrayage, et **en ce qu'**à l'instant où ce nombre de tours quitte une plage de nombre de tours (*thr2* à *thr3*) appropriée pour le vilebrequin du moteur à combustion interne, se situant à l'intérieur d'une plage de nombre de tours admissible au maximum (*thr1* à *thr4*), on fait démarrer le moteur à combustion interne et on porte le nombre de tours de son vilebrequin environ au niveau du nombre de tours de l'arbre d'entrée de la boîte de vitesses manuelle.

2. Procédé selon la revendication 1, **caractérisé en ce que**, lorsque le nombre de tours de l'arbre d'entrée de la boîte de vitesses manuelle quitte la plage de nombre de tours admissible au maximum (*thr1* à *thr4*) pour le vilebrequin du moteur à combustion interne, qui est plus élevée que la plage de nombre de tours appropriée (*thr2* à *thr3*) et qui contient celle-ci, le moteur à combustion interne fonctionne approximativement avec le nombre de tours du ralenti ou avec un nombre de tours de ralenti ou un nombre de tours maximal fluctuant et il fonctionne par ailleurs anormalement au point de vue acoustique.

3. Procédé selon la revendication 2, **caractérisé en ce que** l'on simule ou on produit des ratés d'allumage occasionnels du moteur à combustion interne, lorsque le nombre de tours de l'arbre d'entrée de la boîte de vitesses manuelle descend en dessous de la plage de nombre de tours admissible au maximum (*thr1* à *thr4*) pour le vilebrequin du moteur à combustion interne.

4. Procédé selon la revendication 2 ou 3, **caractérisé en ce que** l'on augmente encore un peu périodiquement le nombre de tours du moteur à combustion interne, lorsque le nombre de tours de l'arbre d'entrée de la boîte de vitesses manuelle dépasse la plage de nombre de tours admissible au maximum (*thr1* à *thr4*) pour le vilebrequin du moteur à combustion interne.

5. Procédé selon l'une quelconque des revendications précédentes, **caractérisé en ce que** lorsque, dans un état où le véhicule automobile roule sans entraînement, où le moteur à combustion interne est au ralenti et où l'embrayage est ouvert, le nombre de tours de l'arbre d'entrée de la boîte de vitesses manuelle quitte la plage de nombre de tours appropriée (*thr2* à *thr3*) pour le vilebrequin du moteur à combustion interne, on porte le nombre de tours du vilebrequin du moteur à combustion interne environ au niveau du nombre de tours de l'arbre d'entrée de la boîte de vitesses manuelle.

6. Dispositif de fonctionnement d'un dispositif automatique Marche/Arrêt dans un véhicule automobile avec un moteur à combustion interne, une boîte de vitesses manuelle et un système d'embrayage automatique, **caractérisé en ce que** le dispositif est conçu pour la mise en oeuvre d'un procédé selon l'une quelconque des revendications précédentes.
